Europäisches Patentamt

European Patent Office

Office européen des brevets

(19)

(11) Numéro de publication: **0 219 178 B1**

## FASCICULE DE BREVET EUROPEEN

(12)

(45) Date de publication de fascicule du brevet:
27.02.91

(51) Int. Cl.⁵: **B01D 19/00, C11B 3/14**

(21) Numéro de dépôt: **86201794.4**

(22) Date de dépôt: **15.10.86**

(54) Procédé d'élimination d'une matière volatile d'un liquide et installation pour la mise en oeuvre de ce procédé.

(30) Priorité: **16.10.85 LU 86121**

(43) Date de publication de la demande:
**22.04.87 Bulletin 87/17**

(45) Mention de la délivrance du brevet:
**27.02.91 Bulletin 91/09**

(84) Etats contractants désignés:
**DE FR GB IT**

(56) Documents cités:
**DE-B- 1 235 487**
**FR-A- 1 272 228**
**FR-A- 2 141 153**
**US-A- 4 072 482**

**JOURNAL OF THE AMERICAN OIL CHEMISTS'**
**SOC., vol. 62, no. 2, février 1985, pages**
**299-308, Champaign, Illinois, US; H. STAGE:**
**"The physical refining process"**

(73) Titulaire: **Athanassiadis, Anthony**
**Avenue Jules César 74**
**B-1150 Bruxelles(BE)**

(72) Inventeur: **Athanassiadis, Anthony**
**Avenue Jules César 74**
**B-1150 Bruxelles(BE)**

(74) Mandataire: **Debrabandere, René**
**Bureau De Rycker sa Arenbergstraat 13**
**B-2000 Antwerpen(BE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention est relative à un procédé d'élimination d'une matière volatile d'un liquide, suivant lequel on impose au liquide à basse pression absolue, une translation continue à travers une chambre dans laquelle on introduit de manière continue le liquide et de laquelle on évacue en même temps le liquide, tout en faisant passer, de bas en haut à travers le liquide se trouvant dans la chambre, de la vapeur qu'on introduit à la partie inférieure de la chambre et qu'on évacue, chargée de matières volatiles, et sans avoir recontré des entraves, de la partie supérieure de la chambre.

Des exemples typiques d'un tel procédé sont la désodorisation et la désacididfication des huiles et graisses végétales et animales. La matière volatile est constituée par les matières odoriférantes et par les acides gras libres et ladite vapeur est de la vapeur d'eau.

Les matières volatiles indésirables à éliminer ont une très faible tension de vapeur. De ce fait leur évaporation ne peut s'accomplir qu'à de très basses pressions absolues, de l'ordre de 3 à 5 millibars, et à des températures de l'ordre de 180 à 260 degrés Celsius. La vapeur d'eau injectée dans la masse de l'huile ou graisse réduit la pression partielle de la vapeur des matières volatiles présentes, qui peuvent ainsi être entraînées dans la vapeur d'eau.

La température à laquelle les huiles et les graisses alimentaires peuvent être traitées est limitée par le fait qu'un chauffage excessif d'une matière grasse provoque l'hydrolyse des glycerides.

Pour des raisons économiques la durée du traitement, la quantité de vapeur d'eau à injecter et par là la consommation de vapeur doivent être aussi basses que possible. Toutefois pour que l'élimination des matières volatiles indésirables, c'est-à-dire la désodorisation ou la désacidification, soit réalisée correctement il faut que sous les conditions de travail (température, pression absolue, contact intime du liquide avec la vapeur vive, quantité de vapeur) une durée minimum soit respectée.

Un contact correct du liquide (matière grasse) avec la vapeur doit assurer un transfert intégral à partir de la couche inférieure vers la surface de façon systématique durant tout le traitement.

En effet à la surface du liquide règne le vide le plus poussé et par conséquent c'est dans cette zone que se produit la distillation des matières volatiles.

Le contact vapeur/liquide doit donc être aussi parfait et intégral que possible.

Par ailleurs la vapeur vive doit être répartie systématiquement dans la masse de liquide pour qu'elle soit saturée avec des matières volatiles avant de s'échapper hors de la surface du liquide.

Les bulles de vapeur réparties dans la masse de l'huile ou graisse en traitement se chargent en matières volatiles et montent vers la surface.

L'efficience de vaporisation (E) est définie comme le rapport entre la pression partielle réelle du volatil dans les bulles de vapeur ($P_{vv}$) ascendantes et la pression partielle du volatil qui serait en équilibre au même endroit dans la matière grasse ($P_{vg}$).

On cherche à ce que le coefficient (E) soit aussi proche que possible de l'unité.

Pour cela il faut que la vapeur soit bien répartie dans la masse de l'huile de façon à la transformer en une couche de bulles qui, venant à la surface, éclatent sous l'action du vide qui y règne.

Il faut d'autre part que la couche d'huile traitée soit peu profonde et en pratique celle-ci, suivant les appareils utilisés est de min. 20 cm et max. 1,2 m, pour que le brassage à laide de la vapeur soit efficace.

Les procédés modernes semi-continus ou continus sont basés sur ce pricipe.

Suivant les procédés continus, auxquels appartient le procédé suivant l'invention, l'agitation de la masse d'huile ou graisse avec la vapeur vive se fait pendant le déplacement continu de cette masse dans l'appareil de désacidification et/ou de désodorisation.

Un procédé de ce genre est connu de FR-A- 1 272 228. On fait passer l'huile à travers un nombre de compartiments situés l'un en-dessous de l'autre. Dans chaque compartiment on impose à l'huile un déplacement horizontal dans des canaux demi-spiralés créés par des cloisons. De la vapeur traverse de bas en haut l'huile.

Dans ce procédé continu la durée réelle du traitement dans le désacidificateur-désodoriseur, n'est pas strictement la même pour toutes les parties de matière grasse mises en opération.

En effet la masse d'huile dans le fond des canaux est soumise à une pression absolue très supéreure à celle à laquelle est soumise la zone de liquide de la surface et ne changera pas de position. Le mouvement horizontal du liquide ne permet donc pas le renouvellement systématique des couches de liquide et n'est pas uniforme pour toutes les particules du liquide.

Si la durée de traitement n'est pas la même pour toutes les particules du liquide, celle qui a subi le traitement le plus court déterminera indiscutablement le degré de désacidification et/ou désodorisation de toute la matière grasse.

Il faudra donc que cette partie là ait resté dans le désacidicatuer ou désodoriseur, au moins le temps minimum requis pour l'accomplissement du procédé.

Pour le volume de l'appareil mis en jeu, la durée moyenne du traitement qu'on a adoptée est une caractéristique prépondérante.

En fait plus la différence entre la durée moyenne et la durée minimum requise est grande, plus grand doit être l'appareil pour assurer une bonne qualité de toute l'huile ou graisse raffinée.

Pour réduire autant que possible la différence entre d'une part la rétention maximale de matières volatiles indésirées dans le produit traité et d'autre part la rétention moyenne de matières volatiles indésirées dans le produit traité on impose, suivant les procédés connus de traitement continu, un passage long du liquide à travers plusieurs compartiments disposés l'un en dessous de l'autre, une multitude de parois verticales obligeant le liquide à parcourir un long chemin à travers ces compartiments.

Les procédés de traitement continu nécessitent ainsi des appareils compliqués dont le volume dépasse largement, de 30 %, le volume d'un appareil de même capacité qui réaliserait un traitement homogène pour tout le produit traité.

L'invention a pour but de remédier à cet inconvénient et de procurer un procédé de traitement continu et tout de même homogène pouvant se réaliser dans un appareil relativement simple avec un minimum de vapeur et à une température suffisament basse pour éviter l'hydrolyse.

A cet effet la translation qu'on impose au liquide dans la chambre est une translation sensiblement uniquement verticale de haut en bas à une vitesse inférieure à 1cm/s sans que le liquide ne rencontre des entraves, on fait passer la vapeur à travers le liquide de bas en haut sous forme de bulles, et on introduit le liquide sur la surface du liquide sur toute son étendue.

De cette façon le liquide (par exemple l'huile ou la graisse) est intégralement soumis aux conditions idéales de distillation des composés volatils, car le liquide fraîchement admis est immédiatement uniformément réparti sur la surface du liquide présent, à savoir à la zone où les conditions d'évaporation sont le plus favorables et ce par la pression basse qui y règne; il n'y a en effet pas de pression hydrostatique à cette surface.

Contrairement à ce qui est le cas suivant les procédés connus de traitement continu il n'y a pas d'agitation brutale du liquide et le contact intime entre la vapeur et le liquide en traitement est réalisé sans surfaces métalliques devant servir de surface de répartition ou de support du liquide dont les matières volatiles indésirées sont à éliminer.

On fait efficacement passer la vapeur à travers le liquide sous forme de bulles de manière à former une couche d'écume à la surface du liquide et on introduit le liquide sur cette couche d'écume sur toute son étendue.

On introduit de préférence la vapeur dans la partie inférieure du liquide sur toute la section inférieure de ce dernier.

Les bulles de vapeur agissent effectivement et intégralement comme vapeur d'entraînement de matières volatiles. Ces bulles pendant leur ascension rencontrent toutes les particules du liquide à traiter.

Dans une forme de réalisation avantageuse de l'invention on impose au liquide successivement plusieurs desdites translations verticales pendant qu'on fait passer la vapeur.

L'invention concerne également une installation destinée à la mise en oeuvre du procédé défini ci-dessus.

L'invention se rapporte à une installation pour éliminer une matière volatile d'un liquide au moyen d'une vapeur comprenant

- au moins une chambre destinée au liquide,
- une conduite d'amenée de liquide débouchant dans la partie supérieure de la chambre,
- une conduite d'évacuation de liquide à partir de la partie inférieure de la chambre,
- des moyens d'introduction de vapeur dans la chambre, débouchant dans la partie inférieure de la chambre,
- un passage pour l'évacuation de gaz à partir de la partie supérieure de la chambre,
- la chambre (4,5,6,7) étant, entre la conduite d'évacuation (17,20) et la conduite d'amenée de liquide (15) libre pour ce liquide, et dépourvue de cloisons pouvent entraver le mouvement vertical du liquide et de la vapeur ou pouvant occasioner un mouvement latéral du liquide ou de la vapeur.

Une installation de ce genre est connue de US-A-4 072 482.

Cette installation connue est manifestement destinée au traitement discontinu de liquide (huile ou matière grasse). La vapeur est introduite au milieu de la section de la chambre de manière à occasionner une agitation dans un liquide stationnaire. L'installation suivant l'invention au contraire est destinée à un traitement dans lequel le liquide subit une translation continue lente de haut en bas.

A cet effet la conduite d'amenée de liquide débouche dans la chambre au-dessus du niveau maximum du liquide, et les moyens d'introduction de vapeur dans la chambre débouchent à proximité immédiate du fond de la chambre et sont constitués par des moyens introduisant la vapeur sous forme de bulles sur toute la section inférieure de la chambre de telle manière que ces bulles rencontrent en contre-courant et uniformement tout le liquide qui descend dans la chambre dans toute la section disponible, sans agitation brutale du liquide en forment une couche d'écume à la surface du liquide.

Dans une forme de réalisation particulière de l'invention la conduite d'évacuation de liquide se présente sous forme de plusieurs siphons dont les branches courtes ont leur extrémité à proximité du fond de la chambre et dont les branches longues traversent ce fond.

Dans une forme de réalisation avantageuse de l'invention l'installation comprend au moins deux chambres superposées, les conduites d'écoulement du liquide d'une chambre supérieure étant raccordées à celles d'amenée de liquide débouchant sur la surface d'une chambre inférieure.

Dans une forme de réalisation préférée de l'invention les chambres sont de forme annulaire et entourent une colonne centrale dans laquelle débouchent leurs passages pour l'évacuation de gaz.

D'autre détails et particularités de l'invention ressortiront de la description d'un procédé d'élimination d'une matière volatile d'un liquide et d'une installation pour la mise en oeuvre de ce procédé suivant l'invention, donnée ci-après à titre d'exemple non limitatif et avec référence aux dessins ci-annexés.

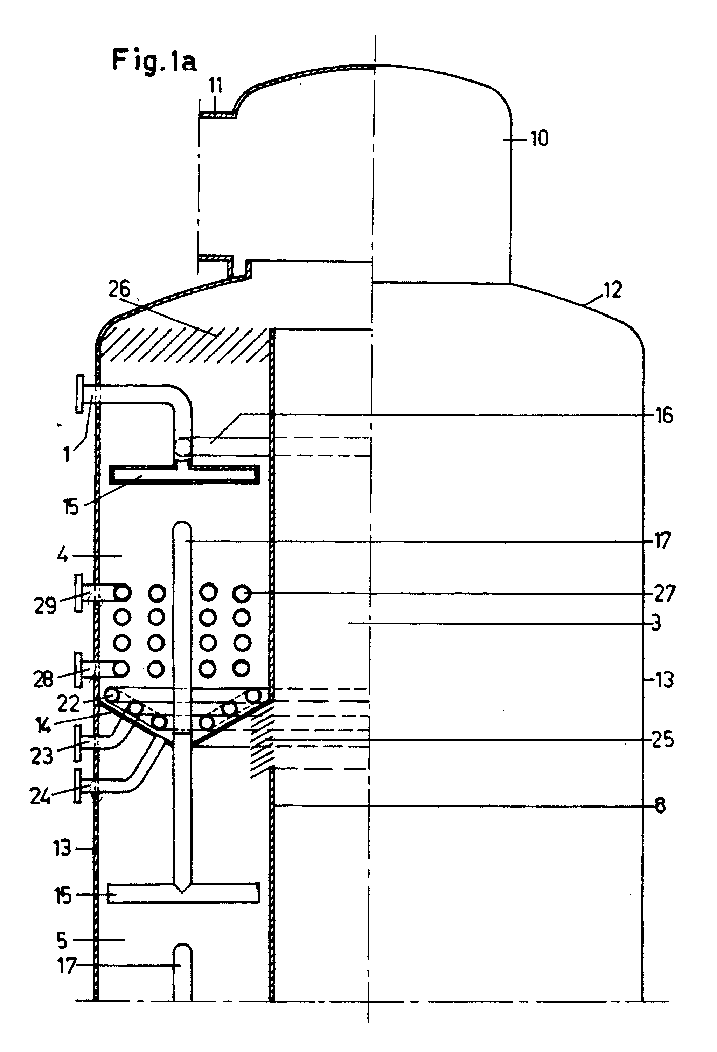

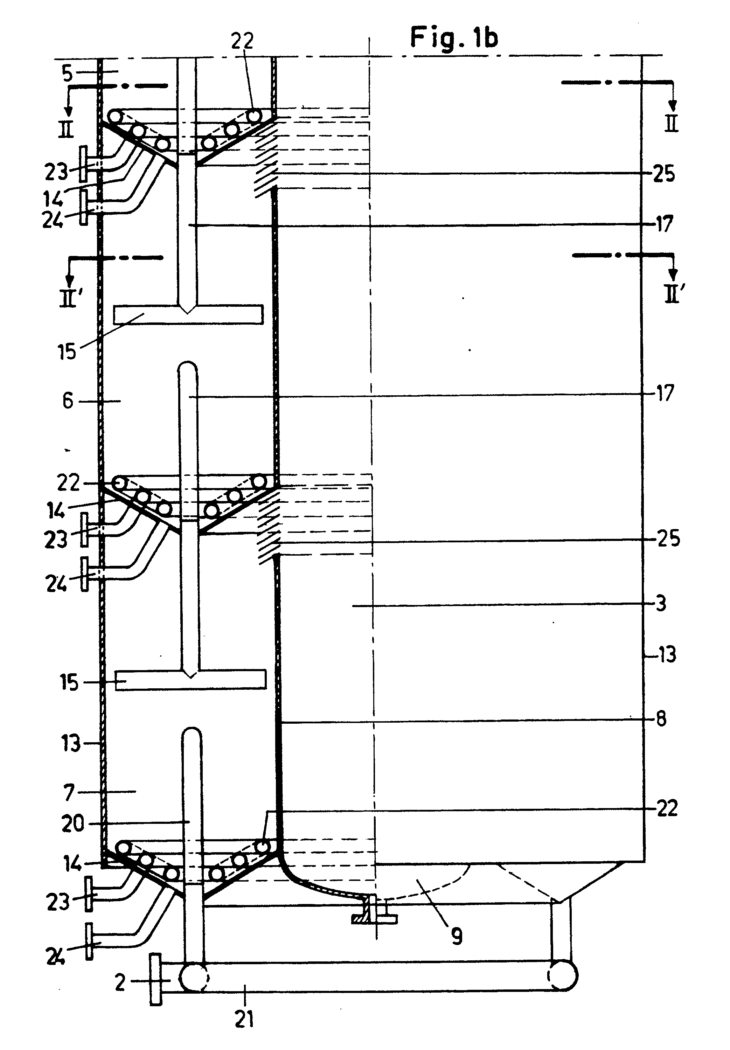

La figure 1, subdivisée en figures 1a et 1b, est partiellement une vue en élévation et partiellement une vue en coupe verticale d'une installation pour élminer une matière volatile d'un liquide suivant l'invention.

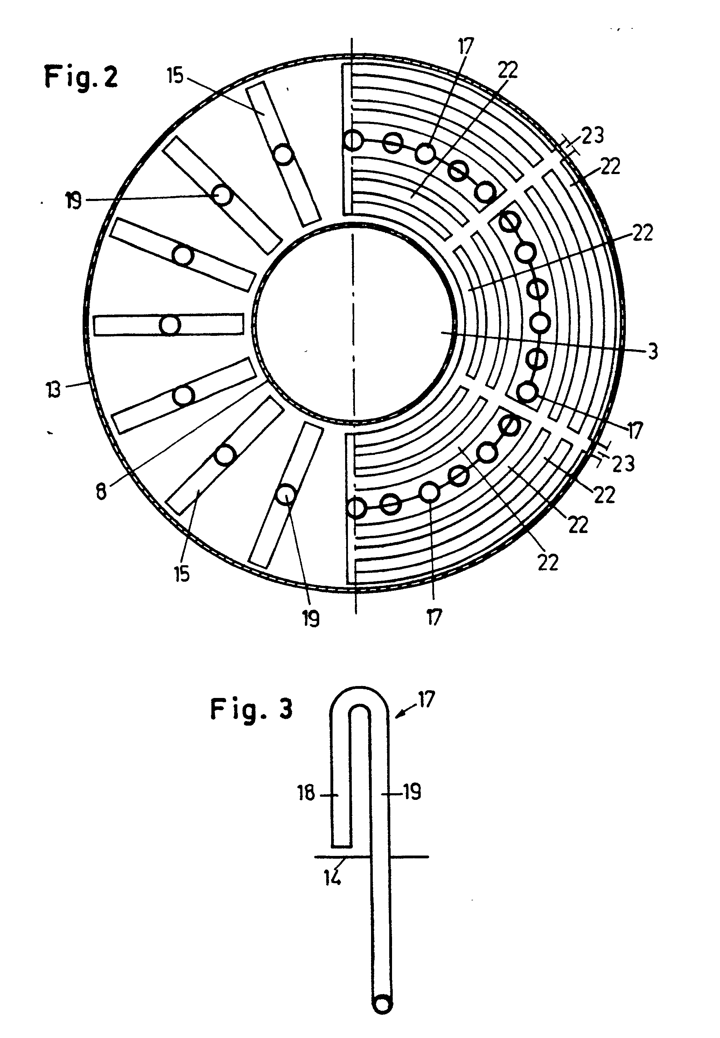

La figure 2 est dans sa partie droite une vue en coupe suivant la ligne II-II de la figure 1 et dans sa partie gauche une vue en coupe suivant la ligne II'-II' de la figure 1.

La figure 3 est une vue en élévation d'un élément de l'installation suivant les figures précédentes.

Dans les différentes figures les mêmes notations de référence désignent des éléments identiques.

Le procédé et l'installation sont décrits ci-après dans leur application à la désodorisation de l'huile. Il est cependant bien entendu que d'autres applications sont possibles et que l'invention s'applique en général à tout traitement ayant pour but d'éliminer des matières volatiles indésirées d'un liquide au moyen d'une vapeur, plus particulièrement de la vapeur d'eau. L'invention s'applique notamment à la désacidification de l'huile par la vapeur et également à la désodorisation et à la désacidification de la graisse sous forme liquide.

L'installation représentée aux figures traite l'huile entre la conduite d'amenée 1 et la conduite de sortie 2. L'installation comprend une colonne centrale 3 et quatre cellules annulaires superposées 4,5,6,7, entourant la colonne centrale 3. La colonne centrale est délimitée par un fond 9 et par une virole intérieure 8. Elle est ouverte vers le haut où elle débouche dans un dôme 10 raccordé à un tube 11 d'évacuation de gaz. Les cellules annulaires superposées 4,5,6,7 entourant la colonne centrale 3 sont délimitées par la virole intérieure 8, une virole extérieure 13 et des fonds côniques annulaires 14. Chaque fond cônique annulaire présente deux parties en forme de cône tronqué. Le cône tronqué intérieur a son sommet dirigé vers le haut et le cône tronqué extérieure a son sommet dirigé vers le bas.

Le couvercle 12 raccordé à la virole extérieure 13 et portant le dôme 10 complète la construction.

Dans la partie supérieure de chacune des chambres constituant les cellules annulaires 4,5,6,7 sont disposées radialement une série de rampes 15 de distribution d'huile. Les rampes de distribution 15 de la cellule supérieure sont raccordées à un tube annulaire 16 qui est raccordé à son tour à la conduite 1 d'amenée d'huile. Les rampes de distribution 15 des cellules annulaires 5,6, et 7 sont alimentées à partir de la cellule immédiatement supérieure 4,5,6 par l'intermédiaire de siphons 17. Chacun de ces siphons 17 a une branche courte 18 dont l'extrémité inférieure se trouve à proximité de la partie la plus basse du fond 14 de la cellule supérieure 4,5,6 et une branche longue 19 traversant ce fond 14 et raccordée à une rampe de distribution 15 d'une cellule inférieure 5,6,7.

Des siphons 20 analogues aux siphons 17 ont l'extrémité inférieure de leur branche courte à proximité de la partie la plus basse du fond 14 de la cellule inférieure 7. Leur branche longue traverse ce fond 14 de la cellule inférieure 7 et est raccordée à un collecteur annulaire 21 qui est raccordé à la conduite de sortie 2. Au-dessus du fond 14 de chacune des cellules 4,5,6,7 sont disposés des tuyaux annulaires 22 présentant des orifices dirigés vers le haut. Dans chacune des cellules 4,5,6 et 7 lesdits tuyaux annulaires 22 sont reliés à plusieurs tubes 23. Ces tubes 23 sont connectés à une source de vapeur d'eau.

Des tubes 24 normalement obturés sont reliés à une partie inférieure du fond 14 de chacune des cellules 4,5,6,7.

Les tubes 24 servent uniquement à la vidange des cellules lorsqu'une huile d'une autre qualité est à traiter mais n'interviennent pas dans le fonctionnement normal de l'installation.

Des ouvertures sont ménagées dans la virole intérieure 8 dans chacune des cellules 5,6 et 7 juste en dessous du fond 14 de la cellule immédiatement supérieure 4,5,6. Des déflecteurs 25 sont placés dans ces ouvertures. La cellule supérieure 4 n'est pas fermée en haut et communique par conséquent à travers la partie supérieure de la colonne centrale 3 avec l'intérieur du dôme 10. Dans la partie supérieure de la cellule supérieure 4 sont placés des déflecteurs 26.

La cellule supérieure 4 est pourvue de moyens de chauffage constitués par des tubes 27 à l'intérieur desquels peut circuler de la vapeur servant uniquement au chauffage de l'huile contenue dans cette cellule. L'entrée et la sortie de ces tubes 27 ont été désignées par 28 et 29. La vapeur circulant dans ces tubes 27 sert uniquement au chauffage et ne vient pas en contact direct avec l'huile.

L'huile est introduite dans la cellule supérieure à partir de la conduite d'amenée 1, à travers le tube annulaire 16, par les rampes de distribution 15. L'huile est traitée dans cette cellule supérieure d'une façon qui sera décrite plus en détail ci-dessous et est évacuée de cette cellule supérieure 4 par les siphons 17 reliant cette cellule à celle située immédiatement en dessous de cette dernière. Les siphons 17 de la cellule 4 alimentent donc les rampes de distribution 15 de la cellule 5. L'huile de cette dernière passe à travers les siphons 17 de cette cellule 5 vers les rampes de distribution 15 situées dans la cellule 6. De la même façon les siphons de la cellule 6 amènent l'huile de cette dernière vers les rampes 15 de distribution de la cellule inférieure 7. Les siphons 20 de cette dernière font passer l'huile de cette cellule inférieure vers le collecteur annulaire 21 et de là vers la conduite de sortie 2.

Au cours du fonctionnement chacune des cellules est remplie d'huile sur une hauteur allant de 200 à 1200 millimètres suivant la nature du produit à traiter. Dans chacune des cellules l'huile descend d'une façon continue à partir d'une surface de liquide supérieure se trouvant à une certaine distance des rampes d'alimentation 15 jusque dans le fond de la cellule, d'où elle est évacuée par les siphons. Le mouvement de l'huile dans les cellules est en principe rectiligne, uniforme et verticale et la vitesse de ce mouvement descendant de l'huile dans les cellules est lente et inférieure à 1 cm/sec. . Dans la partie inférieure de chacune des cellules, juste au-dessus du fond 14, de la vapeur vive est injectée à travers les orifices calibrés d'égal diamètre ménagés dans les parties supérieures des tuyaux annulaires 22. La vapeur injectée à travers ces orifices des tuyaux annulaires 22 est dispersée dans l'huile de la cellule sous forme d'une multitude de bulles ascendantes de petites dimension. A la surface du liquide ces bulles forment une couche d'écume et éclatent sous l'effet de la basse pression.

Il est en effet à remarquer qu'une pression très basse, de l'ordre de 3 à 5 millibars, est maintenue dans toute l'installation par une aspiration exercée sur le tube 11 d'évacuation de gaz raccordé au dôme 10. La basse pression règne également dans les cellules vu que l'intérieur de ces dernières est en communication avec la colonne centrale 3 et donc avec le dôme 10 à travers les ouvertures munies de déflecteurs 25 et 26.

Les matières volatiles et odoriférantes entraînées dans les bulles durant leur trajectoire ascensionnelle sont immédiatement distillées à la surface du liquide en traitement dans ces cellules, ce liquide étant en fait en ébullition intense.

La couche de bulles en éclatement a une épaisseur de plusieurs centimètres et de ce fait elle expose l'huile à une grande surface de distillation, en pratique de plusieurs dizaines de m$^2$, sous la pression la plus basse régnant dans l'installation.

Des mesures ont permis de constater qu'en pratique la pression ne varie guère entre la surface supérieure de l'écume et la couche inférieure de cette dernière. A la surface supérieure les gaz et vapeurs s'échappent vers les ouvertures munies des déflecteurs 25 et 26 et de là vers le dôme 10 d'où ils s'échappent et sont aspirés dans le tube d'évacuation 11. Dans chacune des cellules les bulles de vapeur ascendantes rencontrent en contre-courant et uniformément la masse d'huile qui descend en continu sous une vitesse uniforme qui ne dépasse pas 1 cm/sec. .

Dans la cellule supérieure les tubes 27 échangeurs de chaleur sont immergés dans la masse du liquide en traitement. L'huile préchauffée au préalable à l'extérieur de l'installation y est chauffée jusqu'à la température requise pour accomplir la désodorisation et/ou la désacidification.

Les siphons 17 et 20 maintiennent des niveaux constants dans toutes les cellules 4,5,6,7.

L'huile ou la graisse est donc traitée en continu sous forme d'une couche descendant uniformément dans chaque cellule et s'écoulant d'une cellule à l'autre en continu.

Dans chaque cellule la distillation de matière volatile s'accomplit très rapidement et avant que l'huile ne soit soumise à l'effet de la pression hydrostatique régnant dans le fond de la cellule.

Le traitement rapide est une condition très importante pour certaines matières grasses qui ne peuvent être exposées que pendant un temps limité à haute température.

L'invention n'est nullement limitée à la forme de réalisation décrite ci-avant et bien dès modifica-tions peuvent y être apportées sans sortir du cadre de la présente demande de brevet.

C'est ainsi, par exemple, que le liquide soumis au traitement n'est pas nécessairement de l'huile ou de la graisse animale ou végétale qui doit être désodorisée ou désacidifiée.

Il peut s'agir de n'importe quel liquide dont une matière indésirable est à éliminer au moyen d'une vapeur quelconque, donc pas nécessairement au moyen de la vapeur d'eau, à condition que la matière indésirable soit volatile dans les conditions du traitement.

Le nombre de cellules peut être supérieur ou inférieure à quatre et une installation peut même être limitée à une seule cellule, par exemple si elle est destinée à une prédistillation et/ou à une prédésodorisation et est suivie d'un appareil d'un autre type complétant la distillation et/ou la désodorisation en continu, en semi-continu ou même en discontinu.

La pression absolue peut être différente de celle mentionnée ci-dessus.

## Revendications

1. Procédé d'élimination d'une matière volatile d'un liquide, suivant lequel on impose au liquide à basse pression absolue une translation continue à travers une chambre dans laquelle on introduit de manière continue le liquide et de laquelle on évacue en même temps le liquide, tout en faisant passer de bas en haut à travers le liquide se trouvant dans la chambre, de la vapeur sous forme de bulles qu'on introduit à la partie inférieure de la chambre et qu'on évacue, chargée de matières volatiles, et sans avoir rencontré des entraves dans le liquide, de la partie supérieure de la chambre, caractérisé en ce que la translation qu'on impose au liquide dans la chambre est, à partir de la surface du liquide et sur une grande partie de la hauteur du liquide, une translation à une vitesse inférieure à 1 cm/s sensiblement uniquement verticale de haut en bas sans que le liquide ne rencontre des entraves, qu'on fait passer la vapeur à travers le liquide sous forme de bulles qui forment une couche d'écume à la surface du liquide et qu'on introduit le liquide sur cette couche d'écume de manière que le liquide soit réparti sur pratiquement toute l'étendue de la surface du liquide.

2. Procédé suivant la revendication précédente, caractérisé en ce qu'on introduit la vapeur dans la partie inférieure du liquide sur toute la section de ce dernier.

3. Procédé suivant l'une ou l'autre des revendications précédentes, caractérisé en ce qu'on impose au liquide ladite translation pendant qu'il se présente sous forme d'une colonne d'une hauteur de l'ordre de 20 cm à 120 cm.

4. Procédé suivant l'une ou l'autre des revendications précédentes, caractérisé en ce qu'on impose au liquide successivement plusieurs des dites translations verticales avec passage de vapeur.

5. Procédé suivant l'une ou l'autre des revendications précédentes, caractérisé en ce que le liquide est une huile végétale.

6. Procédé suivant l'une ou l'autre des revendications 1 à 4 caractérisé en ce que le liquide est une graisse.

7. Procédé suivant l'une ou l'autre des revendications précédentes, caractérisé en ce qu'on porte le liquide à une température de l'ordre de 180 degrès à 260 degrés Celsius maximum.

8. Procédé suivant l'une ou l'autre des revendications précédente, caractérisé en ce qu'on impose au liquide ladite translation verticale pendant qu'il se trouve dans un milieu à une pression absolue de l'ordre de 3 à 5 mbar.

9. Installation pour éliminer une matière volatile d'un liquide au moyen de vapeur comprenant :
   - au moins une chambre (4, 5, 6) destinée au liquide;
   - une conduite d'amenée de liquide (15) débouchant dans la partie supérieure de la chambre (4, 5, 6);
   - une conduite d'évacuation (17, 20) du liquide à partir de la partie inférieure de la chambre (4, 5, 6);
   - des moyens (22) d'introduction de vapeur dans la chambre (4, 5, 6) débouchant dans la partie inférieure de la chambre (4, 5, 6) à proximité de son fond (10);
   - un passage (25, 26) pour l'évacuation de gaz à partir de la partie supérieure de la chambre(4, 5, 6);
   - la chambre (4, 5, 6) étant au moins sur une certaine profondeur à partir du niveau maximum prèvu pour le liquide dépourvue de cloisons pouvant dévier le mouvement du liquide de la verticale; caractérisé en ce que :
   - la conduite d'amenée de liquide (15) débouche dans la chambre (4, 5, 6) au-dessus du niveau maximum du liquide, en plusieurs endroits répartis sur toute l'étendue de la surface et
   - les moyens (22) d'introduction de vapeur dans la chambre (4, 5, 6) débouchent à proximité immédiate du fond (14) de la chambre (4, 5, 6) et sont constitués par des moyens (22) introduisant la vapeur sous forme de bulles sur toute la section inférieure de la chambre de sorte que ces bulles rencontrent en contre-courant et uniformément tout le liquide qui descend dans la chambre, sans agitation brutale du liquide et forment une couche d'écume à la surface du liquide.

**10.** Installation suivant la revendication précédente, caractérisée en ce qui la conduite d'évacuation (17, 20) de liquide se présente sous forme de siphons (17, 20) formant un trop plein dont une branche courte (18) a son extrémité à proximité du fond (14) de la chambre (4, 5, 6) et dont une branche longue (19) traverse ce fond (14).

**11.** Installation suivant l'une ou l'autre des revendications 9 et 10, caractérisée en ce qu'elle comprend au moins deux chambres superposées, la conduite d'évacuation (17) de liquide d'une chambre supérieure (4, 5, 6) étant raccordée à la conduite d'amenée de liquide (15) débouchant dans la partie supérieure d'une chambre inférieure (5, 6, 7).

**12.** Installation suivant la revendication précédente, caractérisée en ce qu'elle comprend une chambre (7) en amont des chambres susdites (4, 5, 6) qui est pourvue d'un moyen de chauffage du liquide (27).

**13.** Installation suivant l'une ou l'autre des revendications 11 et 13, caractérisée en ce que les chambres (4, 5, 6, 7) sont de forme annulaire et entourent une colonne centrale (3) dans laquelle débouchent leurs passages (25, 26) pour l'évacuation de gaz.

**14.** Installation suivant la revendication précédente, caractérisée en ce que le fond (14) des chambres (4, 5, 6, 7) de forme annulaire est déterminé par deux surfaces en forme de cône tronqué, une surface intérieure ayant son sommet en haut et une surface extérieure ayant son sommet en bas.

**15.** Installation suivant la revendication précédente, caractérisée en ce que les moyens (22) d'introduction de vapeur sont des tubes circulaires situés à proximité des surfaces susdites.

**16.** Installation suivant l'une quelconque des revendications 13 à 15, caractérisée en ce que les conduites (15) d'amenée de liquide sont des rampes s'étendant transversalement dans les chambres (4, 5, 6, 7) de forme annulaire.

**Claims**

**1.** Procedure for eliminating a volatile substance from a liquid, according to which the liquid at low absolute pressure is subjected to a continuous translation through a chamber into which the liquid is introduced in a continuous manner and in which at the same time the liquid is evacuated, all of which while passing steam in the form of bubbles, from bottom to top through the liquid in the chamber, which is introduced to the lower part of the chamber and which is evacuated, charged with volatile substances, and without having encountered impediments in the liquid, from the upper part of the chamber, characterised in that the translation to which the liquid is subjected in the chamber is, from the the surface of the liquid and over a great part of the height of the liquid, a translation at a speed lower than 1 cm/s. considerably only vertical from top to bottom without the liquid meeting impediments, that steam is passed through the liquid in the form of bubbles which form a layer of froth at the surface of the liquid and that the liquid is introduced onto this layer of froth in such manner that the liquid is distributed over practically the entire surface area of the liquid.

**2.** Procedure according to the preceding claim, characterised in that the vapour is introduced into the lower part of the liquid over the entire section of the latter.

**3.** Procedure according to one or another of the preceding claims, characterised in that the liquid is subjected to the aforementioned translation while it shows the form of a column with a height of the order of 20 cm to 120 cm.

**4.** Procedure according to one or another of the preceding claims, characterised in that the liquid is successively subjected to several of the aforementioned vertical translations with passage of vapour.

**5.** Procedure according to one or another of the preceding claims, characterised in that the liquid is a vegetable oil.

**6.** Procedure according to one or another of the claims 1 through 4, characterised in that the liquid is a grease.

**7.** Procedure according to one or another of the preceding claims, characterized in that the liquid is brought to a temperature of the order of maximum 180 degrees to 260 degrees Centigrade.

**8.** Procedure according to one or another of the preceding claims, characterised in that the liquid is subjected to the aforementioned vertical translation while it is in an environment at an absolute pressure of the order of 3 to 5 mbars.

9. Installation for eliminating a volatile substance from a liquid by means of vapour comprising:
   - at least one chamber (4, 5, 6) destined for the liquid;
   - a liquid supply pipe (15) which exits in the upper part of the chamber (4, 5, 6);
   - a liquid drainage (17, 20) pipe from the lower part of the chamber (4, 5, 6);
   - means (22) for introducing the steam into the chamber (4, 5, 6) which exit into the lower part of the chamber (4, 5, 6) close to its bottom (10);
   - a passage (25, 26) for the evacuation of gas from the upper part of the chamber (4, 5, 6);
   - the chamber (4, 5, 6) being at least at a certain depth from the maximum level provided for the liquid without partitions being able to deviate the movement of the liquid from the vertical, characterized in that:
   - the liquid supply pipe (15) exits in the chamber (4, 5, 6) above the maximum level of liquid, in several places spread over the entire surface area and
   - vapour introduction means (22) in the chamber (4, 5, 6) which exit in the immediate proximity of the bottom (14) of the chamber (4, 5, 6) and are constituted by means (22) introducing the vapour in the form of bubbles over the entire lower section of the chamber in such manner that these bubbles meet in counterflow and uniformly all the liquid which descends into the chamber, without brutal agitation of the liquid and form a layer of froth at the surface of the liquid.

10. Installation according to the preceding claim, characterized in that the liquid evacuation pipe (17, 20) is in the form of siphons (17, 20) forming an overflow of which a short branch (18) at its extremity close to the bottom (14) of the chamber (4, 5, 6) and of which a long branch (19) crosses this bottom (14).

11. Installation according to one or another of the claims 9 and 10, characterised in that it comprises at least two superimposed chambers, the liquid evacuation pipe (17) of one upper chamber (4, 5, 6) being connected to the liquid supply pipe (15) which exits in the upper part of one lower chamber (5, 6, 7).

12. Installation according to the preceding claim, characterized in that it comprises a chamber (7) upstream from the aforementioned chambers (4, 5, 6) which is provided with a liquid heating means (27).

13. Installation according to one or another of the claims 11 and 13, characterized in that the chambers (4, 5, 6, 7) are of annular form and surround a central column (3) in which their passages (25, 26) exit for the evacuation of gas.

14. Installation according to the preceding claim, characterised in that the bottom (14) of the chambers (4, 5, 6, 7) of annular form is determined by two surfaces of truncated cone form, one lower surface having its vertex on top and one exterior surface having its vertex at the bottom.

15. Installation according to the preceding claim, characterised in that the vapour introduction means (22) are circular tubes situated in the proximity of the aforementioned surfaces.

16. Installation according to one of any of the preceding claims 11 through 15, characterised in that the liquid supply pipes (15) are ramps extending transversely into the chambers (4, 5, 6, 7) of annular form.


**Ansprüche**

1. Ein Verfahren zur Eliminierung flüchtiger Bestandteile aus einer Flüssigkeit. gemäß welchem man die Flüssigkeit bei niedrigem absolutem Druck einer lateralen Verschiebung durch eine Kammer aussetzt, in welche man die Flüssigkeit kontinuierlich einführt und aus welcher man gleichzeitig die Flüssigkeit wieder ablaufen läßt, wobei man von unten nach oben durch die in der Kammer befindliche Flüssigkeit Dampf in Blasenform passieren läßt, den man im unteren Teil der Kammer einführt und den man, angefüllt mit flüchtigen Bestandteilen und ohne in der Flüssigkeit auf Hindernisse gestoßen zu sein, aus dem unteren Teil der Kammer wieder abzieht, gekennzeichnet dadurch, daß es sich bei der Verschiebung, der man die Flüssigkeit in der Kammer aussetzt, um eine Verschiebung, ausgehend von der Oberfläche der Flüssigkeit und über einen Großteil der Höhe der Flüssigkeit, handelt, die bei einer Geschwindigkeit von weniger als 1 cm/Sek. und im wesentlichen nur vertikal von oben nach unten stattfindet, ohne daß die Flüssigkeit dabei auf Hindernisse stößt, daß man den Dampf in der Form von Blasen durch die Flüssigkeit führt, wobei die Blasen auf der Oberfläche der Flüssigkeit eine Schaumschicht bilden, und daß man die Flüssigkeit auf diese Schaumschicht so einführt, daß die Flüssigkeit auf praktisch der gesamten Oberfläche der Flüssigkeit verteilt wird.

2. Das Verfahren gemäß dem vorgenannten Anspruch, gekennzeichnet dadurch, daß man den Dampf im unteren Teil der Flüssigkeit auf deren gesamtem Querschnitt einführt.

3. Das Verfahren gemäß einem der vorgenannten Ansprüche, gekennzeichnet dadurch, daß man die Flüssigkeit der erwähnten Verschiebung aussetzt, während sie sich in der Form einer Säule mit einer Höhe von ungefähr 20 bis 120 cm befindet.

4. Das Verfahren gemäß einem der vorgenannten Ansprüche, gekennzeichnet dadurch, daß man die Flüssigkeit nacheinander mehrmals den erwähnten vertikalen Verschiebungen mit Durchführen von Dampf aussetzt.

5. Das Verfahren gemäß einem der vorgenannten Ansprüche, gekennzeichnet dadurch, daß es sich bei der Flüssigkeit um ein Pflanzenöl handelt.

6. Das Verfahren gemäß einem der vorgenannten Ansprüche 1 bis 4, gekennzeichnet dadurch, daß es sich bei der Flüssigkeit um ein Fett handelt.

7. Das Verfahren gemäß einem der vorgenannten Ansprüche, gekennzeichnet dadurch, daß man die Flüssigkeit auf eine Temperatur von maximal ungefähr 180 bis 260 Grad Celsius bringt.

8. Das Verfahren gemäß einem der vorgenannten Ansprüche, gekennzeichnet dadurch, daß man die Flüssigkeit der erwähnten vertikalen Verschiebung aussetzt, während sie sich in einer Umgebung mit einem absoluten Druck von ungefähr 3 bis 5 mbar befindet.

9. Eine Anlage zum Eliminieren flüchtiger Bestandteile aus einer Flüssigkeit mit Hilfe von Dampf, bestehend aus:
   - mindestens einer Kammer (4, 5, 6) für die Flüssigkeit;
   - einer Zuführleitung für die Flüssigkeit (15), die im oberen Teil der Kammer (4, 5, 6) mündet;
   - einer Ablaufleitung (17, 20) für die Flüssigkeit, ausgehend vom unteren Teil der Kammer (4, 5, 6);
   - Mitteln (22) zum Einführen von Dampf in die Kammer (4, 5, 6), die im unteren Teil der Kammer (4, 5, 6) in der Nähe ihres Bodens münden;
   - einer Öffnung (25, 26) zum Abziehen von Gas aus dem oberen Teil der Kammer (4, 5, 6);
   - der Kammer von mindestens einer gewissen Tiefe, ausgehend von dem für die Flüssigkeit vorgesehenen Höchstniveau, versehen mit Trennwänden zum Ableiten der Bewegung der Flüssigkeit aus der Vertikalen; gekennzeichnet dadurch, daß:
   - die Zuführleitung der Flüssigkeit (15) in der Kammer (4, 5, 6) oberhalb des Höchststandes der Flüssigkeit mündet, die an mehreren Stellen auf der gesamten Oberfläche verteilt ist und
   - daß die Mittel (22) zum Einführen von Dampf in die Kammer (4, 5, 6) in unmittelbarer Nähe des Bodens (14) der Kammer (4, 5, 6) münden und aus Mitteln (22) bestehen, die den Dampf in der Form von Blasen auf dem gesamten unteren Querschnitt der Kammer so einführen, daß diese Blasen in Gegenstromrichtung und einheitlich auf die gesamte, in die Kammer herabsinkende Flüssigkeit ohne abrupte Bewegung der Flüssigkeit treffen und auf der Oberfläche der Flüssigkeit eine Schaumschicht bilden.

10. Die Anlage gemäß dem vorgenannten Anspruch, gekennzeichnet dadurch, daß die Ablaufleitung (17, 20) für die Flüssigkeit in der Form von Siphons (17, 20) ausgeführt ist, die einen Überlauf bilden, dessen kurzer Abschnitt (18) sich mit dem Ende in der Nähe des Bodens (14) der Kammer (4, 5, 6) befindet und dessen langer Abschnitt (19) diesen Boden (14) durchquert.

11. Die Anlage gemäß einem der Ansprüche 9 und 10, gekennzeichnet dadurch, daß sie mindestens zwei übereinander angeordneten Kammern besteht, wobei die Ablaufleitung (17) für die Flüssigkeit aus einer oberen Kammer (4, 5, 6) mit der Zuführleitung der Flüssigkeit (15), die im oberen Teil einer unteren Kammer (4, 5, 6) mündet, verbunden ist.

12. Die Anlage gemäß einem der vorgenannten Ansprüche, gekennzeichnet dadurch, daß sie stromaufwärts von den erwähnten Kammern (4, 5, 6) eine Kammer (7) besitzt, die mit einem Mittel zum Erwärmen der Flüssigkeit (27) versehen ist.

13. Die Anlage gemäß einem der Ansprüche 11 und 13, gekennzeichnet dadurch, daß die Kammern (4, 5, 6, 7) eine runde Form haben und eine Mittelsäule (3) umgeben, in welcher ihre Öffnungen (25, 26) zum Abziehen von Gas münden)

14. Die Anlage gemäß einem der vorgenannten Ansprüche, gekennzeichnet dadurch, daß der Boden (14) der Kammern (4, 5, 6, 7) von runder Form durch zwei Flächen in Form eines abgeschnittenen Kegels bestimmt wird, wobei eine innere Fläche ihren höchsten Punkt oben und eine äußere Fläche ihren höchsten Punkt unten hat.

15. Die Anlage gemäß dem vorgenannten Anspruch, gekennzeichnet dadurch, daß es sich bei den Mitteln (22) zum Einführen von Dampf um runde Röhren handelt, die sich in der Nähe der oben erwähnten Flächen befinden.

16. Die Anlage gemäß einem der vorgenannten Ansprüche 13 bis 15, gekennzeichnet dadurch, daß die Zuführleitungen (15) für die Flüssigkeit Rampen sind, die diagonal in den Kammern (4, 5, 6, 7) von runder Form verlaufen.

Fig.1a

# Fig. 1b

**Fig. 2**

**Fig. 3**